# EUROPÄISCHE PATENTANMELDUNG

(11) **EP 1 840 459 A1**
(43) Veröffentlichungstag der Anmeldung: **03.10.2007**
(21) Anmeldenummer: 06006851.7
(22) Anmeldetag: 31.03.2006
(51) Int. Cl.: F23D 11/40

(54) **Brennersystem mit Kalte-Flamme-Prozess**

(71) Anmelder: Truma Gerätetechnik GmbH & Co. KG, 85640 Putzbrunn (DE)
(72) Erfinder: Wickelmaier, Peter, 81671 München (DE); Ströhle, Elmar, 81241 München (DE); Anderschitz, Reiner, 81827 München (DE); Jäger, Markus, 85640 Putzbrunn (DE); Brandtner, Josef, 82110 Germering (DE); Fischoeder, Arnim, 52146 Würselen (DE); Grote, Melanie, 52477 Alsdorf (DE); Lucka, Klaus, 52072 Aachen (DE)
(74) Vertreter: Müller - Hoffmann & Partner

(57) **Zusammenfassung**

Ein Brennersystem weist eine Zerstäubungseinrichtung (2) zum Zerstäuben von flüssigem Kraftstoff sowie einen sich an die Zerstäubungseinrichtung (2) anschließenden Reaktor (1) mit einem Reaktorraum (8) auf. Der Reaktorraum (8) dient zum Aufnehmen des zerstäubten Kraftstoffs, Überführen des zerstäubten Kraftstoffs in eine Gasphase und zur Teiloxidation der Gasphase und damit Erzeugen eines Brenngases durch einen Kalte-Flamme-Prozess. An den Reaktor (1) schließt sich eine Mischkammer (11) zum Mischen des Brenngases mit Sekundärluft an. An der Mischkammer (11) ist ein Gemisch-Auslass (16) vorgesehen, zum Auslassen des Gemischs aus Brenngas und Sekundärluft.

## Beschreibung

Die Erfindung betrifft ein Brennersystem zum Verbrennen von flüssigem Kraftstoff unter Nutzung des so genannten "Kalte-Flamme-Verfahrens".

Für den Einsatz in mobilen Freizeiteinrichtungen, wie z. B. Wohnmobilen oder Caravans, sind Heizungen bekannt, die mit Kraftstoff (Diesel oder Benzin) oder Gas (Flüssiggas, wie z. B. Propan, Butan und Mischungen davon) betrieben werden können. Vorteile von mobilen Gas-Heizungen bestehen in dem geräuscharmen Betrieb, einem niedrigen Stromverbrauch sowie einem sehr geringen Abgasgeruch. Bei Heizungen, die ein Brennersystem für das Verbrennen von flüssigen Kraftstoffen nutzen, können diese Vorteile nicht erreicht werden. Bei Flüssigkraftstoff-Heizungen ist allerdings positiv zu vermerken, dass sie durch denselben Kraftstoff gespeist werden können, der im Kraftstofftank für den Antrieb des Freizeitmobils meist in größerer Menge vorhanden ist. Dadurch kann auf das zusätzliche Mitführen von Gasflaschen verzichtet werden. Aufgrund der Geruchsbelästigung der Abgase sowie der Geräuschbelästigung ist der Einsatz von Flüssigkraftstoff-Heizungen insbesondere auf Campingplätzen jedoch nur begrenzt möglich.

Der Erfindung liegt die Aufgabe zugrunde, ein Brennersystem für eine Flüssigkraftstoff-Heizung anzugeben, mit dem die Nachteile der bisher bekannten Brennersysteme vermieden und vielmehr die Vorteile von gasbetriebenen Brennersystemen erreicht werden können.

Erfindungsgemäß wird die Aufgabe durch ein Brennersystem gemäß Patentanspruch 1 und ein in Anspruch 19 angegebenes Verfahren für ein Brennersystem gelöst. Vorteilhafte Weiterentwicklungen der Erfindung sind in den abhängigen Ansprüchen definiert.

Ein erfindungsgemäßes Brennersystem weist eine Zerstäubungseinrichtung zum Zerstäuben von flüssigem Kraftstoff sowie einen sich an die Zerstäubungseinrichtung anschließenden Reaktor mit einem Reaktorraum zum Aufnehmen des zerstäubten Kraftstoffs, Überführen des zerstäubten Kraftstoffs in eine Gasphase und zur Teiloxidation der Gasphase und damit zum Erzeugen eines Brenngases auf. Weiterhin ist eine sich an den Reaktor anschließende Mischkammer zum Mischen des Brenngases mit Sekundärluft vorgesehen, wobei die Mischkammer mit dem Reaktorraum über einen Brenngaseinlass in Verbindung steht, zum Einlassen von Brenngas aus dem Reaktorraum in die Mischkammer. Die Mischkammer weist einen Sekundärluft-Einlass auf, zum Einlassen von Sekundärluft. Weiterhin weist die Mischkammer einen Gemisch-Auslass auf, zum Auslassen eines in der Mischkammer entstandenen Gemischs aus Brenngas und Sekundärluft. Das Gemisch kann nach Verlassen des Gemisch-Auslasses entzündet werden, wobei die dabei entstehende Flamme geräuscharm verbrennt und ein nahezu geruchloses Abgas erzeugt.

Auf diese Weise kann mit dem flüssigen Kraftstoff (Diesel) ein Verbrennungsprozess realisiert werden, der durch eine exotherme Vorreaktion (Teiloxidation) ein Brenngas erzeugt, das sich nachfolgend in ähnlicher Weise wie das Gas von Flüssiggas-betriebenen Brennersystemen verbrennen lässt.

Das erfindungsgemäße Brennersystem realisiert dabei folgende Prozesse: Zunächst wird der flüssige Kraftstoff durch die Zerstäubungseinrichtung in feine, schnell verdampfbare Tröpfchen überführt. Die Tröpfchen werden anschließend durch Zufuhr von Wärme verdampft und in die Gasphase überführt. Die dafür erforderliche Wärme kann beim Startvorgang durch eine später erläuterte Heizeinrichtung bereitgestellt werden. Im Dauerbetrieb hingegen ist die Heizeinrichtung nicht erforderlich. Stattdessen wird die für die Verdampfung der Kraftstofftröpfchen erforderliche Wärme von der exothermen Vorreaktion bereitgestellt, die bei der Teiloxidation der Gasphase abläuft.

Die Teiloxidation der Gasphase entspricht einer Kraftstoffaufbereitung, die im Stand der Technik als "Kalte Flamme" bekannt ist und in der EP 1 102 949 B1 ausführlich beschrieben wird. Der Inhalt der EP 1 102 949 B1 wird somit ausdrücklich in die vorliegende Beschreibung aufgenommen. Die dort enthaltene Beschreibung des Kalte-Flamme-Prozesses sowie die dort angegebenen Verfahrensparameter finden auch bei der vorliegenden Anmeldung für die Realisierung der Teiloxidation der Gasphase Verwendung. Wesentliche Verfahrensparameter sind z. B. dem Patentanspruch 1 der EP 1 102 949 B1 zu entnehmen, auf den zur Vermeidung von Wiederholungen Bezug genommen wird.

Durch das Phänomen der Kalten Flamme können wichtige, bisher ausschließlich auf der Basis von Gasen (Erdgas, Propan, Butan) betreibbare Prozesse auf den Einsatz von flüssigen Brennstoffen erweitert werden. Es handelt sich bei der Kalten Flamme um exotherme Reaktionen des insbesondere flüssigen Brennstoffes bei Anwesenheit eines Oxidators (Primärluft), die zu einer spontanen Temperaturerhöhung von bis zu 180 K führen. Ähnliche Temperaturerhöhungen können zwar auch durch partielle Oxidation des Brennstoffes erreicht werden, indem die zugeführte Luftmenge entsprechend reduziert wird. Der Unterschied zur "Kalte-Flamme-Reaktion" besteht jedoch unter anderem darin, dass bei der Kalten Flamme nur ein Teilumsatz des Oxidators und des Brennstoffs erfolgt. Bei der partiellen Oxidation wird der zugeführte Brennstoff nur partiell umgesetzt, da nur eine begrenzte Menge des Oxidators vorhanden ist. Im Gegensatz zum "Kalte-Flamme-Prozess" wird der zugeführte Oxidator in der Reaktion vollständig verbraucht.

Zum erstmaligen Einleiten der chemischen Reaktionen der Kalten Flamme ist eine definierte Temperatur des Oxidators erforderlich, die durch die bereits erwähnte und weiter unten erläuterte Heizeinrichtung erreicht wird. Die Temperatur kann ebenfalls durch Vorheizen der Primärluft erreicht oder unterstützt werden, wie ebenfalls später noch erläutert wird.

Die frei gewordene Energie der exothermen Reaktion der Kalten Flamme unterstützt die Verdampfung des zerstäubten Kraftstoffes.

Mit dem "Kalte Flamme"-Prozess ist eine Aufbereitung und/oder Veredelung von flüssigen Kohlenwasserstoffen erreichbar, die es ermöglicht, bisher nur für gasförmige Brennstoffe vorteilhaft nutzbare Verbrennungstechniken auch für flüssige Energieträger anzuwenden, wie in der EP 1 102 949 B1 geschildert. Durch das Kalte-Flamme-Verfahren wird ein Gemisch mit neuen Eigenschaften erzeugt. Die Zusammensetzung des Kraftstoffs ändert sich aufgrund der chemischen Reaktionen. Durch Oxidations- und Zerfallsreaktionen reagieren dabei hauptsächlich lange Kohlenwasserstoffketten zu kurzen Kohlenwasserstoffketten.

Das durch die Teiloxidation der Gasphase, also durch den Kalte-Flamme-Prozess erzeugte Reaktionsprodukt dient als Brenngas für den nachfolgenden, eigentlichen Verbrennungsvorgang. Dazu wird das Brenngas als Reaktionsprodukt des Kalte-Flamme-Prozesses aus dem Reaktor ausgeleitet und zu einer Mischkammer geführt, wo das Brenngas mit Sekundärluft vermischt werden kann. Das so entstehende Gasgemisch wird aus der Mischkammer über den Gemisch-Auslass ausgeleitet und kann außerhalb der Mischkammer verbrannt werden, wobei die dabei entstehende Abwärme des Rauchgases zum Betreiben einer Heizung genutzt werden kann. Dementsprechend ist das durch den Verbrennungsvorgang entstehende Rauchgas über einen Wärmetauscher zu führen.

Bei einer Ausgestaltung der Erfindung ist die Zerstäubungseinrichtung eine Rotationszerstäubungseinrichtung, mit einem den Kraftstoff in Tröpfchenform absondernden Rotor. Der Kraftstoff wird auf den Rotor aufgeträufelt, der den Kraftstoff in feinen Tröpfchen abschleudert.

Bei einer Ausgestaltung der Erfindung ist neben der Zerstäubungseinrichtung ein Primärluft-Einlass vorgesehen, zum Einlassen von Primärluft in den Reaktor. Wie oben bereits erläutert, dient die Primärluft als Oxidator für den Kalte-Flamme-Prozess.

Es kann dementsprechend zweckmäßig sein, wenn eine Vorwärmeinrichtung vorgesehen ist, zum Vorwärmen der Primärluft vor dem Einlassen in den Reaktor. Auf diese Weise kann der Kalte-Flamme-Prozess einfacher gestartet sowie im Betrieb gut kontrolliert werden.

Die Zerstäubungseinrichtung kann von dem Reaktor thermisch getrennt sein. Dadurch wird es möglich, den Reaktor relativ schnell auf die erforderliche Betriebstemperatur zu bringen, ohne die Zerstäubungseinrichtung mitbeheizen zu müssen. Auch im Betrieb des Teiloxidations-Prozesses (Kalte Flamme) geht weniger Wärme verloren, wenn sie nicht über die Zerstäubungseinrichtung abgeführt werden kann.

Zwischen der Zerstäubungseinrichtung und einer Reaktorwand kann ein Luftspalt vorgesehen sein. Der Luftspalt dient zum einen als Primärluft-Einlass. Zum anderen unterstützt er die thermische Trennung der Zerstäubungseinrichtung von dem Reaktor.

Wenn der Luftspalt als Ringdüse ausgebildet ist, kann er den Rotationszerstäuber vollständig umgeben, um die thermische Trennung zu verbessern.

Wie oben bereits erwähnt, kann in dem Reaktor eine Heizeinrichtung vorgesehen sein. Die Heizeinrichtung dient dabei insbesondere zum Starten des Teiloxidations-Vorgangs, für den in dem Reaktionsraum eine bestimmte Mindesttemperatur erreicht werden muss. Die erforderlichen Temperaturwerte sind der EP 1 102 949 B1 zu entnehmen und können für unterschiedliche Kraftstoffe variieren.

Die Heizeinrichtung kann als eigenständiges Element in dem Reaktor angeordnet sein und z. B. elektrisch betrieben werden. Ebenso ist es möglich, dass die Heizeinrichtung innen an der Reaktorwand oder in einem Teil der Reaktorwand integriert angeordnet ist. Auch ist es möglich, die Reaktorwand selbst zu beheizen.

Die durch die Teiloxidation freigesetzte Wärme kann zum Überführen des in dem Reaktorraum zerstäubten Kraftstoffs in die Gasphase, also zum Verdampfen der feinen Kraftstoff-Tröpfchen, genutzt werden. Dadurch ist es nicht erforderlich, den Reaktor mit Hilfe der zusätzlichen Heizeinrichtung permanent zu beheizen. Der exotherme Kalte-Flamme-Prozess genügt, um ausreichend Wärme für die Verdampfung der Kraftstofftröpfchen bereitzustellen.

In dem Reaktorraum können Gasführungs- und/oder Gasverwirbelungselemente angeordnet sein, um den Kalte-Flamme-Prozess zu unterstützen. Hierbei muss sichergestellt werden, dass keine Kraftstoff-Tröpfchen den Reaktorraum verlassen und in die Mischkammer gelangen können. Vielmehr muss der Kraftstoff soweit wie möglich durch die Teiloxidation in das Brenngas gewandelt werden, um die sonst üblicherweise bei der Verbrennung von flüssigem Kraftstoff auftretenden Nachteile zu vermeiden.

Zu diesem Zweck kann im Bereich des den Reaktorraum mit der Mischkammer verbindenden Brenngas-Einlasses ein Prallelement angeordnet sein, um den Brenngasstroms wieder zurück in den Reaktorraum umzulenken. Auf diese Weise wird sichergestellt, dass der Brenngasstrom mehrfach dem Kalte-Flamme-Prozess unterzogen wird, um eventuell noch enthaltene Kraftstoff-Tröpfchen durch die Kalte Flamme zu oxidieren.

Der Sekundärluft-Einlass kann in Form von mehreren Öffnungen einer die Mischkammer umgebenden Mischkammerwand ausgebildet sein. Die aus der Umgebung zugeführte Sekundärluft kann auf diese Weise einfach und sicher der Mischkammer zugeführt werden, um dort mit dem Brenngas vermischt zu werden.

Die Primärluft und/oder die Sekundärluft können durch ein Gebläse zugeführt werden, um eine zuverlässige Versorgung des Brennersystems mit Primärluft und Sekundärluft zu gewährleisten.

Ein erfindungsgemäßes Verfahren gibt das Zerstäuben des flüssigen Kraftstoffs in dem Reaktorraum, das Verdampfen des zerstäubten Kraftstoffs in eine. Gasphase, das Teiloxidieren der Gasphase durch einen Kalte-Flamme-Prozess, das Ausleiten eines durch den Kalte-Flamme-Prozess entstehenden Brenngases in eine Mischkammer, das Mischen des Brenngases mit Sekundärluft in der Mischkammer und das Ausleiten des Gemischs aus Brenngas und Sekundärluft an.

Schließlich wird eine erfindungsgemäße Verwendung des oben beschriebenen, erfindungsgemäßen Brennersystems angegeben, wobei bei dieser Verwendung das Brennersystem nicht zum Verarbeiten von flüssigem Kraftstoff sondern zum Verarbeiten von extern zugeführtem Brenngas dient. Das Brennersystem wird dementsprechend in einem reinen Gasbetrieb betrieben, während dem Brennersystem kein flüssiger Kraftstoff zugeführt wird. Vielmehr erhält das Brennersystem das Brenngas aus einem außerhalb des Brennersystems vorhandenen Brenngasvorrat. Das Brenngas wird in den Reaktorraum und danach über den Brenngaseinlass in die Mischkammer geführt, um dort mit Sekundärluft vermischt zu werden.

In dem Reaktorraum kann das Brenngas mit Primärluft vermischt werden. Dementsprechend kann die Primärluft über den am Reaktorraum vorhandenen Primärluft-Einlass zugeführt werden. Das Brenngas kann über einen eigenen Brenngaseinlass oder über die im Gasbetrieb nicht genutzte, stillstehende Zerstäubungseinrichtung in den Reaktorraum geführt werden. Z. B. kann demgemäß das Brenngas über die Düse der Zerstäubungseinrichtung eingeleitet werden, über die im "Kraftstoffbetrieb" der Kraftstoff auf den Rotor aufgetropft wird. Die Primärluft kann dann dazu dienen, das Brenngas mit in den Reaktorraum und anschließend in die Mischkammer zu zwingen.

Die Verwendung des Brennersystems in einem Gasbetrieb erlaubt eine bivalente Nutzung des Brennersystems, nämlich zum einen in einem Kraftstoffbetrieb, bei dem flüssiger Kraftstoff als Ausgangsmedium genutzt wird, und zum anderen in einem reinen Gasbetrieb, in dem bereits fertiges Brenngas, z. B. auf der Basis von Flüssiggas (Propan, Butan oder ein Gemisch davon) zugeführt wird.

Diese und weitere Vorteile und Merkmale der Erfindung werden nachfolgend anhand eines Beispiels unter Zuhilfenahme der begleitenden Figur näher erläutert.

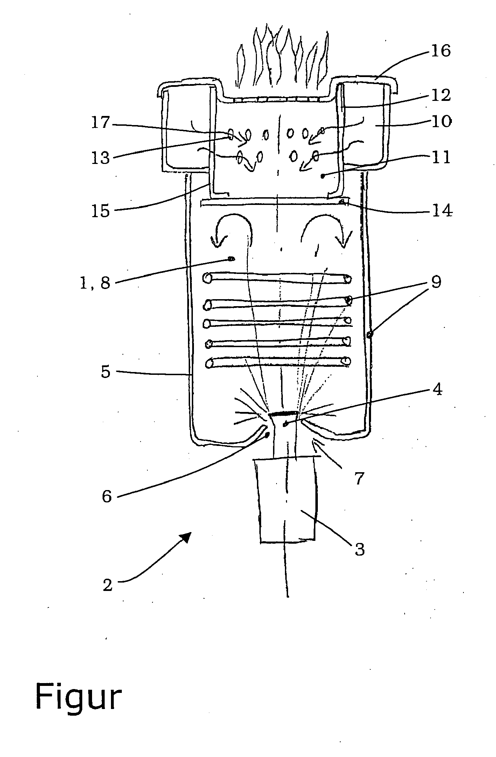

Die **einzige Figur** zeigt einen schematischen Querschnitt durch ein erfindungsgemäßes Brennersystem.

An der Unterseite eines topfförmigen Reaktors 1 ist ein als Zerstäubungseinrichtung dienender Rotationszerstäuber 2 angeordnet. Der Rotationszerstäuber 2 weist einen Antriebsmotor 3 auf, der einen Rotor 4 drehend antreibt.

Zwischen einer den Reaktor 1 umgebenden Reaktorwand 5 und dem Rotor 4 ist ein kreisförmiger Luftspalt vorgesehen, der eine Ringdüse 6 bildet, über die Primärluft 7 in das Innere des Reaktors 1, also in einen Reaktorraum 8 zugeführt werden kann. Die Primärluft 7 wird über ein nicht dargestelltes Gebläse eingeblasen.

In dem Reaktorraum 8 ist eine Heizeinrichtung 9 vorgesehen, die entweder als separate Heizeinrichtung im Inneren des Reaktorraums 8 angeordnet ist oder z. B. durch die Reaktorwand 5 selbst gebildet wird. Die Heizeinrichtung wird z. B. elektrisch betrieben und dient dazu, einen Startvorgang des Brennersystems zu unterstützen.

Oberhalb des Reaktorraums 8 ist auf der Reaktorwand 5 ein Ringkanal 10 angeordnet, über den Sekundärluft - z. B. durch ein weiteres Gebläse - zuführbar ist. Die Sekundärluft kann aber auch von dem gleichen Gebläse zugeführt werden, wie die Primärluft.

Von dem Ringkanal 10 wird eine Mischkammer 11 umschlossen, die ebenfalls oberhalb von dem Reaktorraum 8 angeordnet und von dem Ringkanal 10 gehalten ist. Die Mischkammer 11 wird durch eine Mischkammerwand 12 gebildet, die mehrere als Sekundärluft-Einlass dienende Öffnungen 13 aufweist, so dass Sekundärluft in das Innere der Mischkammer 11 eindringen kann. Der Strom der Sekundärluft ist mit dem Bezugszeichen 17 gekennzeichnet.

Die Mischkammer 11 ist an ihrer Unterseite durch eine Prallscheibe 14 begrenzt, die durch mehrere sich an die Mischkammerwand anschließende Haltezungen 15 gehalten ist. Zwischen den Halterungen 15 bildet sich dadurch ein Brenngaseinlass aus, durch den Gas aus dem Reaktorraum 8 in die Mischkammer 11 strömen kann.

Die Oberseite der Mischkammer 11 wird durch eine als Gemisch-Auslass dienende Brennerbrille 16 abgedeckt, die ihrerseits Öffnungen aufweist, über die das Brenngas-Sekundärluft-Gemisch austreten kann.

Nachfolgend wird der Betrieb des erfindungsgemäßen Brennersystems erläutert.

Der Antriebsmotor 3 treibt den Rotor 4 des Rotationszerstäubers 2 drehend an. Auf den Rotor 4 wird flüssiger Kraftstoff, z. B. Diesel, aufgetropft. Durch die Wirkung des Rotationszerstäubers 2 werden die Kraftstofftropfen in Form von feinen Kraftstofftröpfchen in den Reaktorraum 8 geschleudert. Der Rotationszerstäuber 2 ist in der Lage, bereits bei geringen Gebläsedrücken und damit auch bei geringer Geräuschentwicklung ein ausreichend feines Spray bis hin zu kleinsten Kraftstoffmengen bereitzustellen.

Über die Ringdüse 6 wird die Primärluft 7 eingeblasen, die sich in dem Reaktorraum 8 mit den Kraftstofftröpfchen vermischt. Die Primärluft 7 kann vorgewärmt sein, um eine Prozessstabilisierung zu erreichen und Ablagerungen zu vermeiden. Zu diesem Zweck kann in der Zuführung der Primärluft 7 eine zusätzliche Heizeinrichtung eingebaut sein. Alternativ kann die Primärluft auch entlang der Außenseite des Reaktorraums 5 oder entlang eines nicht dargestellten Wärmetauschers geführt werden, der von dem Rauchgas einer Flamme beheizt wird, die durch Verbrennen des Brenngas-Sekundärluft-Gemischs oberhalb der Brennerbrille 16 entsteht.

In dem Reaktorraum 8 erfolgt der oben ausführlich erläuterte Kalte-Flamme-Prozess in Form einer exothermen Vorreaktion. Durch die freiwerdende Wärme werden die Kraftstofftröpfchen verdampft und in eine Gasphase überführt, die anschließend der Teiloxidation mit der Primärluft durch die Kalte Flamme unterzogen wird.

Zum Start der Vorrichtung kann zusätzlich die Heizeinrichtung 9 betrieben werden, um in dem Reaktorraum 8 eine ausreichende Temperatur zu erreichen. Die Heizeinrichtung 9 kann jedoch nach einer bestimmten Betriebszeit wieder abgeschaltet werden, wenn die von dem Kalte-Flamme-Prozess freiwerdende Wärme ausreicht, um die Kraftstoff-Tröpfchen zu verdampfen.

Durch den Kalte-Flamme-Prozess werden die langkettigen Kohlenwasserstoffmoleküle des Kraftstoffs in kürzere Ketten gewandelt, wodurch ein Brenngas entsteht. Das Brenngas strömt anschließend über den Brenngaseinlass in die Mischkammer 11, wobei die Prallscheibe 14 als Strömungshindernis dient, um den Brenngasstrom wiederholt umzulenken. Auf diese Weise soll erreicht werden, dass möglichst keine Kraftstrofftröpfchen mehr das Brenngas verunreinigen. Der Brenngasstrom wird gezwungen, um die Prallscheibe 14 herum zwischen den Haltezungen 15 hindurch (Brenngaseinlass) in die Mischkammer 11 zu strömen.

In der Mischkammer 11 wird das Brenngas mit der durch die Öffnungen 13 einströmenden Sekundärluft vermischt. Das Gemisch gelangt anschließend über die Brennerbrille 16 an die Oberseite des Brennersystems, wo das Brenngas-Sekundärluftgemisch verbrannt werden kann. Die dabei entstehende Rauchgaswärme wird dann für eine nicht dargestellte Heizung verwendet.

Mit Hilfe des Kalte-Flamme-Prozesses und des erfindungsgemäßen Brennersystems ist es möglich, ein homogenes Brenngas-Sekundärluft-Gemisch zu erreichen, das einen ablagerungsfreien Verbrennungs-Betrieb erlaubt. Die exotherme Vorreaktion, der Teilumsatz des Sauerstoffs, die Molekülkettenverkleinerung und die Verdampfung der Kraftstofftröpfchen ohne Hilfsenergien (autotherm) erlaubt einen in gewissen Grenzen selbst regulierenden Prozess. In dem Reaktor 1 werden die Kraftstofftröpfchen in eine reine Gasphase umgewandelt, ohne jedoch dabei vollständig zu oxidieren. Daraus ergibt sich, dass sich das teiloxidierte "Kraftstoff-Gas" (Brenngas) ähnlich wie z. B. Propan und Butan verhält, wodurch die bei Gasbrennersystemen gegebenen Vorteile erreicht werden können. Die entstehenden Verbrennungsabgase weisen nicht den üblicherweise bei der Verbrennung von flüssigem Kraftstoff entstehenden Geruch auf. Ebenso sind die Geräusche bei der Verbrennung deutlich vermindert.

Das erfindungsgemäße Brennersystem kann in einer Heizung für den Einsatz in mobilen Freizeitfahrzeugen genutzt werden, bei denen Flüssigkraftstoff in der Regel in größeren Mengen bevorratet wird, da der Kraftstoff zum Antrieb für den Fahrzeugmotor genutzt werden muss.

Aufgrund seines Aufbaus erlaubt es das erfindungsgemäße Brennersystem, dass es statt mit Flüssig-Kraftstoff auch mit Gas (z. B. Propan oder Butan oder einem Gemisch davon) betrieben werden kann. In diesem Fall sind der Rotationszerstäuber 2 und der Reaktor 1 funktionslos, da kein Kalte-Flamme-Prozess erforderlich ist. Vielmehr gelangt das als Brenngas dienende Gas unverändert in die Mischkammer 11, wo es mit der Sekundärluft 17 vermischt, werden kann. Das Brennersystem kann somit in zwei unterschiedlichen Betriebsarten betrieben werden, nämlich einerseits Verbrennung von Flüssigkraftstoff unter Nutzung des Kalte-Flamme-Prozesses und andererseits Verbrennung von Gas (z. B. auf Basis von Flüssiggas) ohne Nutzung des Kalte-Flamme-Prozesses.

## Patentansprüche

1. Brennersystem, mit
- einer Zerstäubungseinrichtung (2) zum Zerstäuben von flüssigem Kraftstoff;
- einem sich an die Zerstäubungseinrichtung (2) anschließenden Reaktor (1) mit einem Reaktorraum (8) zum Aufnehmen des zerstäubten Kraftstoffs, Überführen des zerstäubten Kraftstoffs in eine Gasphase und zur Teiloxidation der Gasphase und damit zum Erzeugen eines Brenngases; und mit
- einer sich an den Reaktor (1) anschließenden Mischkammer (11) zum Mischen des Brenngases mit Sekundärluft,
wobei
- die Mischkammer (11) mit dem Reaktorraum (8) über einen Brenngaseinlass in Verbindung steht, zum Einlassen von Brenngas aus dem Reaktorraum (8) in die Mischkammer (11);
- die Mischkammer (11) einen Sekundärluft-Einlass (13) aufweist, zum Einlassen der Sekundärluft; und wobei
- die Mischkammer (11) einen Gemisch-Auslass (16) aufweist, zum Auslassen eines Gemischs aus Brenngas und Sekundärluft.

2. Brennersystem nach Anspruch 1, **dadurch gekennzeichnet, dass** die Zerstäubungseinrichtung (2) eine Rotationszerstäubungseinrichtung ist, mit einem den Kraftstoff in Tröpfchenform absondernden Rotor (4).

3. Brennersystem nach Anspruch 1 oder 2, **dadurch gekennzeichnet, dass** neben der Zerstäubungseinrichtung (2) ein Primärluft-Einlass (6) vorgesehen ist, zum Einlassen von Primärluft in den Reaktor (1).

4. Brennersystem nach Anspruch 3, **dadurch gekennzeichnet, dass** eine Vorwärmeinrichtung vorgesehen ist, zum Vorwärmen der Primärluft vor dem Einlassen in den Reaktor (1).

5. Brennersystem nach einem der Ansprüche 1 bis 4, **dadurch gekennzeichnet, dass** die Zerstäubungseinrichtung (2) von dem Reaktor (1) thermisch getrennt ist.

6. Brennersystem nach einem der Ansprüche 1 bis 5, **dadurch gekennzeichnet, dass** zwischen der Zerstäubungseinrichtung (2) und einer Reaktorwand (5) ein Luftspalt (6) vorgesehen ist.

7. Brennersystem nach Anspruch 6, **dadurch gekennzeichnet, dass** der Luftspalt (6) als Primärluft-Einlass dient.

8. Brennersystem nach Anspruch 6 oder 7, **dadurch gekennzeichnet, dass** der Luftspalt (6) als Ringdüse ausgebildet ist, die den Rotationszerstäuber (2) umgibt.

9. Brennersystem nach einem der Ansprüche 1 bis 8, **dadurch gekennzeichnet, dass** in dem Reaktor (1) eine Heizeinrichtung (9) vorgesehen ist.

10. Brennersystem nach Anspruch 9, **dadurch gekennzeichnet, dass** die Heizeinrichtung (9) innen an der Reaktorwand (5) oder in einem Teil der Reaktorwand (5) angeordnet ist.

11. Brennersystem nach einem der Ansprüche 1 bis 10, **dadurch gekennzeichnet, dass** die Teiloxidation der Gasphase als Kalte-Flamme-Prozess gemäß der EP 1 102 949 B 1 durchführbar ist.

12. Brennersystem nach einem der Ansprüche 1 bis 11, **dadurch gekennzeichnet, dass** durch die Teiloxidation Wärme freisetzbar ist, die zum Überführen des zerstäubten Kraftstoffs in die Gasphase, insbesondere zum Verdampfen des Kraftstoffs nutzbar ist.

13. Brennersystem nach einem der Ansprüche 1 bis 12, **dadurch gekennzeichnet, dass** in dem Reaktorraum (8) Gasführungs- und/oder Gasverwirbelungselemente angeordnet sind.

14. Brennersystem nach einem der Ansprüche 1 bis 13, **dadurch gekennzeichnet, dass** im Bereich des Brenngaseinlasses ein Prallelement (14) angeordnet ist, zum teilweisen Umlenken eines Brenngasstroms zurück in den Reaktorraum (8).

15. Brennersystem nach Anspruch 14, **dadurch gekennzeichnet, dass** das Prallelement (14) im Strömungsweg des Brenngases zwischen dem Reaktorraum (8) und der Mischkammer (11) angeordnet ist.

16. Brennersystem nach einem der Ansprüche 1 bis 15, **dadurch gekennzeichnet, dass** der Sekundärluft-Einlass in Form von mehreren Öffnungen (13) einer die Mischkammer (11) umgebenden Mischkammerwand (12) ausgebildet ist.

17. Brennersystem nach einem der Ansprüche 1 bis 16, **dadurch gekennzeichnet, dass** die Primärluft und/oder die Sekundärluft durch ein Gebläse zuführbar sind.

18. Brennersystem nach einem der Ansprüche 1 bis 17, **dadurch gekennzeichnet, dass** der Kraftstoff ein Flüssig-Kraftstoff ist, insbesondere Diesel.

19. Verfahren für ein Brennersystem zum Verbrennen von flüssigem Kraftstoff, mit den Schritten:
- Zerstäuben des flüssigen Kraftstoffs und Vermischen mit Primärluft in einem Reaktorraum (8);
- Überführen des zerstäubten Kraftstoffs in eine Gasphase in dem Reaktorraum (8);
- Teiloxidieren der Gasphase durch einen Kalte-Flamme-Prozess in dem Reaktorraum (8) und **dadurch** Erzeugen eines Brenngases;
- Ausleiten des Brenngases aus dem Reaktorraum (8) in eine Mischkammer (11);
- Mischen des Brenngases mit Sekundärluft in der Mischkammer (11);
- Ausleiten des Gemischs aus Brenngas und Sekundärluft aus der Mischkammer (19).

20. Verwendung eines zum Verbrennen von flüssigem Kraftstoff geeigneten Brennersystems nach einem der Ansprüche 1 bis 18, **dadurch gekennzeichnet, dass**
- das Brennersystem in einem reinen Gasbetrieb betrieben wird und somit kein Kraftstoff in das Brennersystem eingeleitet wird; und dass
- das Brenngas aus einem außerhalb des Brennersystems vorhandenen Brenngasvorrat in den Reaktorraum (8) und danach in die Mischkammer (11) zum Mischen mit der Sekundärluft geführt wird.

21. Verwendung nach Anspruch 20, **dadurch gekennzeichnet, dass** das Brenngas in dem Reaktorraum (8) mit Primärluft vermischbar ist.

22. Verwendung nach Anspruch 20 oder 21, **dadurch gekennzeichnet, dass** das Brenngas über einen eigenen Brenngaseinlass oder über die im Gasbetrieb stillstehende Zerstäubungseinrichtung (2) in den Reaktorraum (8) geführt wird.
